# EUROPEAN PATENT SPECIFICATION

(11) **EP 0 914 294 B1**
(45) Date of publication and mention of the grant of the patent: **04.10.2001**
(21) Application number: 98922696.4
(22) Date of filing: 07.04.1998
(51) Int. Cl.: C01C 1/04, C01B 3/02, C01B 3/38

(54) **OXYGEN AND NITROGEN INJECTION FOR INCREASING AMMONIA PRODUCTION**
SAUERSTOFF- UND STICKSTOFFHINZUFÜGUNG ZUR ERHÖHUNG DER AUSBEUTE DER HERSTELLUNG VON AMMONIA
INJECTION D'OXYGENE ET D'AZOTE POUR ACCROITRE LA PRODUCTION D'AMMONIAC

(30) Priority: 10.04.1997 US 835986
(43) Date of publication of application: 12.05.1999
(73) Proprietor: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: KONTOPOULOS, Athanasios, Résidence Ilot Descours, F-91400 Orsay (FR); KOENIG, Jacques, F-78000 Versailles (FR)
(86) International application number: EP9802145
(87) International publication number: WO9845211

(56) References cited:
- EP-A- 0 093 502
- EP-A- 0 770 578
- GB-A- 2 103 199
- GB-A- 2 160 516
- US-A- 4 296 085
- US-A- 4 792 441

## Description

### BACKGROUND OF THE INVENTION

### 1. FIELD OF THE INVENTION

The present invention relates to an ammonia synthesis plant generating hydrogen using steam reformers. More particularly, the present invention relates to use of oxygen and nitrogen for increasing ammonia production.

### 2. DESCRIPTION OF THE RELATED ART

An ammonia plant feeds hydrogen and nitrogen, and the hydrogen is generated by various methods including steam reforming using a primary reformer followed by a secondary reformer. A light hydrocarbon feed, typically methane, is fed to the primary reformer with steam where the feed reacts with steam over a catalyst in an endothermic reaction to form hydrogen, carbon monoxide, and carbon dioxide. Conversion is not complete, and the outlet gas from the primary reformer typically contains from 9 to 16 mole percent of unreacted methane. The outlet gas from the primary reformer is mixed with process air and fed to the secondary reformer where oxygen from the air burns with hydrogen and methane to provide heat for reforming reactions which take place over a fixed bed of catalyst. The outlet stream from the secondary reformer is an ammonia synthesis gas comprising hydrogen, nitrogen (introduced as a component of the process air), carbon monoxide, carbon dioxide, and some unreacted methane.

Carbon monoxide is not only a poison for an ammonia synthesis catalyst but it is also useless for the ammonia synthesis and therefore must be transformed. Thus, carbon monoxide is transformed into carbon dioxide and hydrogen through a two-stage shift reaction over a catalyst. The first stage is a high temperature shift reactor followed by a second stage, low temperature shift reactor. Carbon dioxide is thereafter removed from the produced gas by any adequate method. Remaining trace amounts of carbon monoxide and carbon dioxide are transformed in a methanation reactor to methane. Water is typically taken out by condensation. This provides a synthesis gas suitable for feed to an ammonia synthesis section.

Often, an ammonia production plant is limited in production by the primary steam reformer and compressor capacity for providing the process air. Thus, the primary steam reformer and the air compressor are frequently bottlenecks in the ammonia production plant. To produce more hydrogen for feed to an ammonia synthesis section, the primary steam reformer would need to accept a higher thermal load in order to provide the heat necessary for the endothermic reforming reaction. This is not possible where for various reasons the primary steam reformer is running at maximum capacity. Where the primary steam reformer can produce more hydrogen, then more air must be provided by the process air compressors. However, this is not possible if the compressors are running at maximum capacity.

U.S. Patent No. 4,414,191 to Fuderer describes a process for the production of ammonia using a pressure swing absorption system for the purification of hydrogen to be used in an ammonia synthesis gas, where nitrogen is employed as a purge gas at an elevated purge pressure. The hydrogen recovered at absorption pressure contains about 20 to 25 per cent nitrogen, and is used as ammonia synthesis gas. An air separation system provides the nitrogen, and oxygen recovered from the air separation system is employed in a hydrogen generation system. Although the nitrogen is used beneficially for purging the pressure swing absorption beds, it is not controllably added for the primary purpose of providing nitrogen in a proper stoichiometric ratio with hydrogen for producing an ammonia synthesis gas.

U.S. Patent No. 4,681,745 to Pinto describes production of ammonia by a sequence of steam hydrocarbon primary reforming, secondary reforming with air, carbon monoxide shift conversion, carbon oxides removal and catalytic ammonia synthesis using oxygen-enriched air at the secondary reformer. The oxygen enriched air can be the by-product of a simple air separation plant producing nitrogen, where the nitrogen is used to aid start-up or shut-down of the process or to keep the process plant in a hot stand-by condition. An air separation plant provides a substantially pure nitrogen stream and a stream enriched in oxygen, with the nitrogen preferably stored and used as a purge. However, nitrogen is not controllably added for the purpose of providing nitrogen reactant in a beneficial ratio to hydrogen for increasing ammonia production.

U.S. Patent No. 5,180,570 to Lee et al. describes an integrated process for making methanol and ammonia from a hydrocarbon feed stock using an air separation unit to produce substantially pure oxygen and nitrogen gas streams. The oxygen gases used in the secondary reformer increase the operating pressure of the reformers so that compression to methanol synthesis pressure may be done in a single stage compressor. The nitrogen gas is used to remove carbon oxides impurities from an ammonia synthesis feed stream in a nitrogen wash unit in addition to supplying the nitrogen reactant in the ammonia synthesis gas. This patent is directed to an integrated process for making both methanol and ammonia rather than to increasing ammonia production by controlled addition of oxygen and nitrogen.

U.S. Patent No. 4,988,491 to Van Dijk et al. describes an integrated production of ammonia and urea using adiabatic reforming with substantially pure oxygen and nitrogen so that inert gases such as argon are not introduced into the system. With adiabatic reforming there is no primary reformer, and oxygen and nitrogen are not controllably added for debottlenecking an ammonia plant constrained by its primary reformer.

E.P. 770 578 published after the priority date to which the present invention is entitled, relates to ammonia production with enriched air reforming and nitrogen injection into the synthesis loop.

U.S. Patent No. 4,792,441 to Wang et al. describes an ammonia synthesis plant including first and secondary reformers. The secondary reformer is supplied with an oxygen-rich air stream. The quantity of unreacted methane from the primary reformer is balanced with the quantity of air introduced in the secondary reformer to obtain a product having approximately the desired stoichiometric mixture H₂:N₂ of 3:1.

Thus, there remains a need for systems and methods for debottlenecking an existing ammonia plant which is limited in production by its primary steam reformer or its process air compressors. When an ammonia production plant is limited by the primary steam reformer and/or the process air compressors, it would be highly desirable to increase the production of hydrogen for feed to an ammonia synthesis section without major expenditure to modify or replace this equipment. In such a desired process, production capacity should be increased while respecting the thermal constraints in the reformers, minimizing investment and optimizing the operation of the plant.

### SUMMARY OF THE INVENTION

In an ammonia synthesis plant using primary and secondary steam reformers for hydrogen production, an air compressor supplies air to the secondary reformer, providing oxygen for combustion and heat generation in the secondary reformer and nitrogen for use in ammonia synthesis. The air compressor and/or the primary reformer is operating at maximum capacity. The present invention provides a process for increasing ammonia production as defined in claim 1. According to this claim ammonia production is increased without expanding the capacity of either the primary reformer or the air compressor, and thus without the need for such investment. Feed preferably (but not necessarily) bypasses the primary reformer and enters the secondary reformer directly. Preferably up to about 30 percent of total feed to the ammonia plant can be fed directly to the secondary reformer in this manner.

In accordance with the invention, an oxygen stream is added to enrich process air fed to the secondary reformer for forming a synthesis gas, which contains typically less than 0.6 percent methane molar on dry basis. Methane concentration or leakage in the synthesis gas is controlled by manipulating the flow rate of the oxygen stream. The secondary reformer is consequently more independent of the primary reformer than in traditional schemes, allowing smoother operation. Further, in accordance with the invention, a nitrogen-enriched stream is added to the synthesis gas to form a feed gas for an ammonia synthesis section. The ammonia synthesis feed gas produced this way contains typically less than 1.3% inerts (on dry basis). The nitrogen concentration, or preferably a ratio of H₂:N₂, is controlled by manipulating the flow rate of the added nitrogen stream. With independent control of the H₂:N₂ ratio, the ammonia synthesis section is more decoupled from the steam reformers than in traditional schemes, which allows smoother operation. With the system and process of the present invention, ammonia production is substantially increased by separate and independent oxygen and nitrogen addition without investment in the primary reformer or the air compressor.

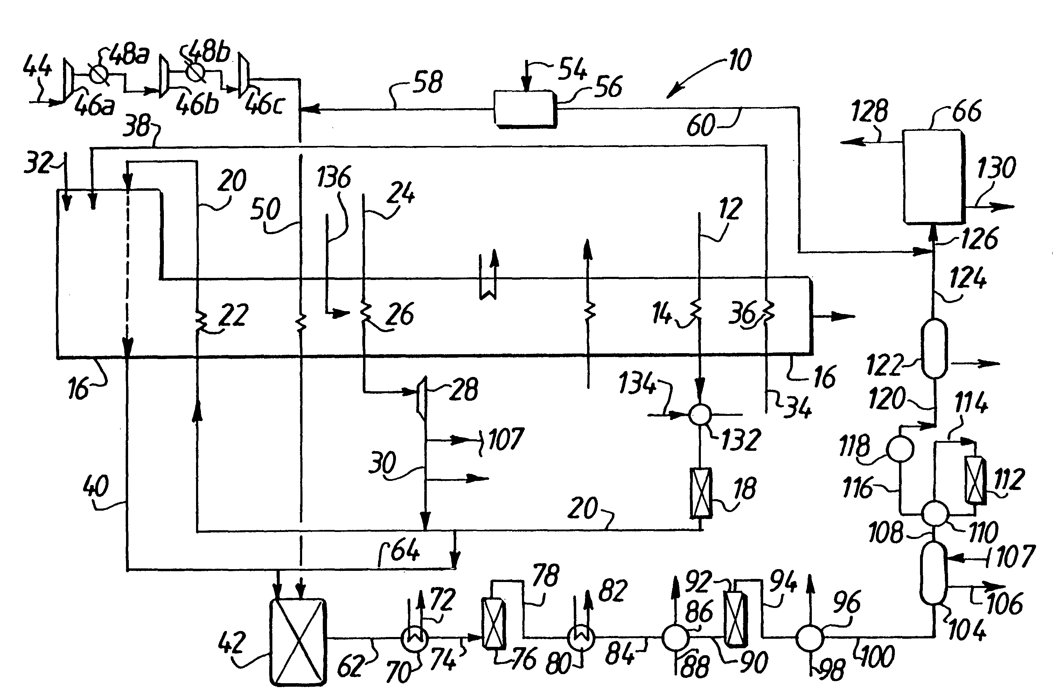

### BRIEF DESCRIPTION OF THE DRAWING

A better understanding of the present invention can be obtained when the following detailed description is considered together with the figure, which is a schematic illustration of an ammonia synthesis plant with oxygen and nitrogen addition according to the present invention.

### DETAILED DESCRIPTION OF THE PREFERRED EMBODIMENTS

To increase production of ammonia from an existing ammonia plant, which uses primary and secondary steam reformers, both hydrogen and nitrogen flows to an ammonia synthesis section must be increased. To increase the hydrogen flow, the primary reformer must accept higher thermal loads in order to provide the heat necessary for endothermic reforming reactions. This is not always possible due to limitations on heat flux through tubes filled with catalyst in the primary reformer or other concerns. Higher heat flux creates higher thermal stress, and thus an increase in production typically requires a revamp of the tubes or an additional primary reformer. Both of these options are costly.

Where the primary reformer can accept an increase in its throughput, its outlet process gas must be further reacted in the secondary reformer. For the secondary reformer to accommodate an increase more air should be brought to the secondary reformer for providing heat from combustion for the endothermic reforming reactions and thus producing more hydrogen and decreasing methane leakage at the outlet of the secondary reformer. The additional air introduced also provides the nitrogen needed for the production increase. However, it may not be possible to bring more air into the secondary reformer because frequently the air compressor used to provide air is operating at its maximum capacity.

Typically, process air flow to the secondary reformer is manipulated to obtain the required H₂:N₂ ratio in the plant, and primary reformer firing (fuel gas inlet flow to the primary reformer) is manipulated to obtain a specified methane leakage (concentration) at the outlet of the secondary reformer. As primary reformer firing increases, methane leakage decreases. Methane leakage should be controlled because excessive methane leakage contributes to greater losses of reactants in a synthesis purge, thus smaller efficiency. Sometimes a fair decrease of the methane leakage leads to a better process efficiency. Nevertheless, in case that neither oxygen nor nitrogen are injected, this results, inevitably, to a higher heat load in the primary reformer tubes which leads to shorter life of tubes and catalyst.

On the other hand, control of the H₂:N₂ ratio is essential to control the ammonia synthesis section, mainly the operation of the ammonia converter (for example, in cases where catalysts other than magnetite ones are used).

As mentioned before, in traditional schemes (without oxygen nor nitrogen injection) the process air flow rate to the secondary reformer is manipulated to obtain a desired H2:N2 ratio upstream of the ammonia converter. Nevertheless, it is frequent in industrial practice for operators to also manipulate the air flow rate to adjust the methane leakage because the oxygen contained in the air also influences this leakage. But this interferes with the H₂:N₂ ratio. In other words, as the nitrogen to oxygen ratio in the air is fixed (N₂:O₂ ratio = 3.71 mol/mol), bringing incremental oxygen to the system by air means bringing inevitably 3.71 times more nitrogen: this does not necessarily correspond to the optimum H₂:N₂ ratio for the ammonia synthesis section. On the contrary if the H₂:N₂ ratio is controlled this determines the air flow rate and, consequently, the oxygen flow rate leading to a secondary reformer operation and a methane leakage which is not necessarily the optimum. It is evident that such control schemes are rather rigid.

It would be useful to have N₂:O₂ ratios that are not constrained by the air composition for each particular plant and thus increase the independence and flexibility of the reformers and the ammonia synthesis section. The best way to achieve this is through an independent oxygen and nitrogen injection as provided with this invention.

For example, with a specific plant having a methane leakage of 0.4 percent at the secondary reformer outlet and without oxygen nor nitrogen injection, the specific energy consumption can be decreased by 0.35 percent by increasing adequately the primary reformer's firing to have a methane leakage of 0.28 percent. The counterpart is that this makes the heat duty of the primary reformer to increase, resulting in a 5 °C increase of the tubes wall temperature. This can be detrimental to the tubes life or even destroy the same (tubes could creep under stress. On the contrary, in the same example, with the injection of oxygen and nitrogen, as provided with this invention, a similar reduction in the methane leakage and the specific energy consumption can be obtained by increasing, in this case by 13 percent, the injected oxygen flow rate without increasing the heat load in the primary reformer.

Ammonia production may be increased through simultaneous oxygen and nitrogen injection while adjusting operational parameters thus avoiding a primary reformer revamp, additional construction, or purchase of additional air compressors. Production can be increased by as much as much as 40 percent, provided that downstream equipment such as high-temperature shift (HTS) and low-temperature shift (LTS) reactors, carbon dioxide removal, the methanation unit, as well as some ammonia synthesis section units, have sufficient capacity. Pure (nitrogen-free) oxygen is injected in the secondary reformer (in practice mixed with the inlet process air) to burn with hydrogen and some methane to provide some additional heat for the endothermic reforming reaction and thus increase hydrogen production and, at the same time, control methane leakage at its outlet without increasing the firing of the primary reformer. However, the ammonia synthesis feed gas produced this way is typically poor in nitrogen (H₂:N₂ ratio typically about 3.15 to 3.3).

Thus, pure (oxygen-free) gaseous nitrogen is injected upstream of the ammonia synthesis section to control this ratio at an optimum level. Besides easy H₂:N₂ ratio control, nitrogen injection at this point also helps to diminish pressure drops in the front end (i.e. upstream of the ammonia synthesis section). Other injection points can be used such as the secondary reformer, HTS or LTS reactors, the methanation reactor, the steam condensation unit or, potentially, in the ammonia synthesis section. Injection points are chosen according to the design specifics presented in each plant, and consideration should be given to the pressure availability of gaseous nitrogen as well as its purity. The present invention also provides for part of a fresh hydrocarbon feed to be shifted directly to the secondary reformer in order to decrease energy consumption. Approximately 0 to 45 percent and more typically 5 to 30 percent of the fresh feed can be bypassed around the primary reformer and fed directly to the secondary reformer, but this percentage has to be optimized for each particular case.

Turning now to the Figure, an ammonia production plant **10** is schematically illustrated according to the present invention. The process described is simplified, and one skilled in the art of ammonia plants will appreciate that although an ammonia plant is much more complex than described, the import of the present invention can be understood. A natural gas feed **12** is preheated in a coil **14** in the associated heat recovery section of a primary reformer **16,** and sulfur compounds are removed in a desulfurization unit **18.** A stream containing hydrogen (most often deviated from the ammonia synthesis section) is usually added upstream of this unit. Fumes **134** from a burner exchange heat in **132** with process gas upstream the desulfurization unit **18** and burner's fuel flow rate is manipulated to maintain a constant inlet temperature in unit **18.** Desulfurized feed flows through a line **20** and a preheat coil **22** into primary reformer **16.** A source of saturated steam **24** is superheated in a coil **26** and expanded in a steam turbine **28** which discharges part of the steam through a line **30** into line **20,** where it is mixed with desulfurized feed in line **20.** The rest of the steam is usefully used in turbines to drive compressor shafts, or used in sections such as the CO₂ removal section (stream **107**). Fumes **136** from a side burner allow control of the steam superheating temperature; thus protecting turbine **38,** and providing constant steam quality. Heat for endothermic reactions that take place in primary reformer **16** is provided by burning fuel gas **32** with combustion air preheated in a coil **36** and provided through a line **38.** Primary reformer **16** is operated at maximum capacity as determined by one of many possible constraints such as maximum tube metal temperature.

Feed **12** is typically primarily methane which reacts with steam **24** over catalyst inside tubes in primary reformer **16** to produce hydrogen and carbon oxides in an endothermic steam reforming reaction to produce a primary reformer product stream **40.** Conversion is incomplete, and primary reformer product steam **40** contains typically nine to sixteen mole percent of unreacted methane on dry gas basis as well as unused steam from stream **24.**

Primary reformer product stream **40** is fed to a secondary reformer **42,** which is typically an adiabatic catalytic reactor. Drawing from the atmosphere, process air **44** is compressed in a three-stage compressor **46a, 46b** and **46c** and cooled with intermediate coolers **48a** and **48b,** which is referred to generally as air compressor **46.** The compressor's shaft is usefully driven by a steam turbine. The discharge from air compressor **46** flows via a line **50** through a preheat coil **52** into secondary reformer **42,** where process air **44** mixes with primary reformer product stream **40.** Some hydrogen and some unreacted methane in primary reformer product stream **40** are combusted with the oxygen in process air **44** to provide heat for production of additional hydrogen in secondary reformer **42.**

Air compressor **46** is operated at its maximum capacity as determined by any one of several possible constraints such as a metallurgically determined speed constraint. Secondary reformer **42** and downstream units have additional capacity so the limit on ammonia production is determined by primary reformer **16** and air compressor **46.** In this scenario primary reformer **16** cannot provide additional primary reformer product stream **40,** and air compressor **46** cannot deliver additional air **44** to secondary reformer **42.** Primary reformer **16** and air compressor **46** are thus a bottleneck to further ammonia production. This problem is alleviated by the present invention.

Air **54** is separated in an air separation unit **56** to produce a substantially-pure (essentially nitrogen-free) oxygen stream **58** and a substantially-pure (essentially oxygen-free) nitrogen stream **60,** or nitrogen or oxygen may be brought externally e.g., by pipeline, or obtained by any production means. Preferably, oxygen stream **58** has typically an oxygen concentration of greater than 99.5 mole percent, and nitrogen stream **60** has typically a nitrogen concentration of almost 100 mole percent (containing from 2-5 ppm atomic oxygen with all oxygenated compounds in it), however, the purity may be less. Oxygen stream **58** is added to process air line **50** for providing more oxygen in secondary reformer **42.** With additional oxygen available, more hydrogen and methane can be burned in secondary reformer **42** to provide heat for a net increase in production of hydrogen in an ammonia synthesis gas **62.** Since oxygen is no longer a limit to hydrogen production, desulfurized feed in line **20** can be fed directly to secondary reformer **42** via a bypass line **64.** Water for steam reforming reactions in secondary reformer **42** is provided by, if necessary, increasing the flow rate of steam **24** so that sufficient steam is in primary reformer product stream **40** for reactions in secondary reformer **42.** Another way of adding steam to the system, when increasing the capacity of the plant, is to increase flow rate **24,** as above, but instead of adding this incremental flow to line **20** from line **30,** some steam from line **30** can be directly added upstream or downstream of the secondary reformer bypassing the primary reformer. This strategy can help to avoid excessive pressure drops in the primary reformer while keeping the adequate steam to carbon ratio in the secondary reformer and the shift converters. Injecting some steam to the inlet of the secondary reformer will also allow to decrease secondary reformer's outlet temperature (the endothermic reforming reaction will progress more). Thus, by adding oxygen stream **58,** the production of hydrogen in secondary reformer **42** can be increased, provided that inlet feed gas flow rate **12** is also increased.

Synthesis gas **62** comprises primarily hydrogen, nitrogen, carbon monoxide, carbon dioxide, and unreacted methane and steam. The concentration of unreacted methane, referred to as methane leakage, in synthesis gas **62** is controlled primarily by manipulating the flow rate of oxygen stream **58.** This allows the desired methane concentration in the final ammonia synthesis feed gas **126** to be obtained. In an ammonia plant that does not have oxygen injection as described here, methane concentration in the synthesis gas **69** is controlled typically on the one hand by manipulating firing in the primary steam reformer, which is difficult because there is a great deal of lag time between manipulating fuel gas flow to the primary reformer and detecting an ultimate change in methane concentration in the synthesis gas **62.**

With the present invention, primary reformer **16** is controlled to maximize the production of hydrogen in primary reformer product stream **40** by operating up against a constraint, whatever that constraint may be. In this mode primary reformer **16** is operated under relatively constant conditions, which allows for better utilization of the equipment, allowing operation at optimum conditions. Under these conditions, the variations in the quality of primary reformer product stream **40** are minimized.

The feed, primary reformer product stream **40,** to secondary reformer **42** is more stable since primary reformer **16** is now more decoupled from secondary reformer **42** because methane concentration in synthesis gas **62** is not controlled primarily by manipulating the flow rate of fuel gas **32** to primary reformer **16.** Instead, methane concentration in synthesis gas **62** is controlled primarily by manipulating the flow rate of oxygen stream **58** while the firing of the primary reformer can be kept practically constant. By increasing the flow rate of the oxygen stream **58** the methane concentration in synthesis gas **62** decreases and by decreasing the flow rate of stream **58** the methane concentration (leakage) in synthesis gas **62** increases. This clearly allows to reach the methane leakage set-point in synthesis gas **62.** This is a much simpler control strategy than has been used in the past, partly because the lag time between a change in flow rate of oxygen stream **58** and an ultimate change in methane concentration in synthesis gas **62** is relatively short as compared to a change in flow rate of fuel gas **32** and an ultimate change in methane concentration in synthesis gas **62.**

Hydrogen production from secondary reformer **42** is increased until a constraint is reached, thus providing sufficient hydrogen production to accommodate the ammonia production increase in the following manner. Air compressor **46** is operated at maximum capacity to provide the maximum amount of air possible to secondary reformer **42** (air intake flow rate **44** can not be further increased), while providing a relatively constant flow. Primary reformer **16** is operated at maximum capacity and thus partially reformed feed gas **40** to the secondary reformer **42** can not be further increased. Feed to secondary reformer **42** through bypass line **64** is increased until a limit is reached, which is typically a limit on secondary reformer **42** or on the downstream pieces of equipment. By bypassing feed around primary reformer **16** and feeding directly to secondary reformer **42** through bypass line **64,** flow of feed **12** can be increased up to **45** percent and more typically by 5 to 30 percent. In another embodiment of the present invention the increase of feed gas **12** is not bypassed around primary reformer through line **64** but continues through line **20** and flows unreformed through primary reformer tubes, resulting in an increase of the methane concentration in line **40.** Oxygen is brought into the secondary reformer **42** using line **58** and then **50** and its flow rate is increased until there is sufficient heat from combustion in the secondary reformer to reform the increase of feed gas **12,** thus increasing hydrogen production to accommodate the ammonia production increase and decreasing the methane leakage in synthesis gas **62** to the appropriate level.

The synthesis of ammonia (NH₃) requires one mole of nitrogen for three moles of hydrogen. With the addition of substantially-pure oxygen stream **58** to process air line **50**, the concentration of nitrogen in ammonia synthesis gas is less than it would be if only process air **44** was present in line **50,** since nitrogen is a major component of air. Consequently, there is less than one mole of nitrogen per three moles of hydrogen (more than three moles of hydrogen per mole of nitrogen) also in ammonia synthesis gas **124.** A ratio of hydrogen to nitrogen (H₂:N₂) is monitored and expressed as moles of hydrogen per mole of nitrogen. With the addition of oxygen stream **58,** the H₂:N₂ ratio in ammonia synthesis gas **124** typically ranges between about 3.15 and about 3.30 before separate addition of nitrogen.

The concentration of nitrogen in ammonia synthesis gas **124** is increased, to form the final ammonia synthesis feed gas **126,** by adding substantially-pure nitrogen stream **60** to synthesis gas **62** to provide a desired ratio of hydrogen to nitrogen at the ammonia converter inlet. This arrangement is easy to control. Primary reformer **16** and secondary reformer **42** are operated to increase production of hydrogen to accommodate the ammonia production increase. The flow rate of nitrogen stream **60** is then simply manipulated to provide a desired concentration of nitrogen in the ammonia converter inlet gas. An online hydrogen analyzer and a flow meter is used to determine the amount of hydrogen upstream of the ammonia converter, and a simple ratio controller is used to manipulate the flow rate of nitrogen stream **60** to maintain a desired ratio of hydrogen to nitrogen.

Nitrogen stream **60** is illustrated here as being added to synthesis gas **62** just upstream of an ammonia synthesis section **66.** This is the preferred injection point for nitrogen because it corresponds to the lowest pressure level of the ammonia synthesis gas and thus injected nitrogen can have lower pressure. On the other hand, injection of nitrogen at this point minimizes pressure drops in the synthesis gas preparation train (secondary reformer, shift reactors, methanation reactor) because nitrogen does not circulate in this section. This fact allows a higher pressure of the ammonia synthesis feed gas **126** resulting in smaller energy consumption in the compressors in the ammonia section. However, nitrogen stream **60** can be added at any point where it becomes a part of the feed to ammonia synthesis section **66.** The point of addition is determined on a case-by-case basis, with practical consideration given to the available pressure and purity of the nitrogen, (e.g. nitrogen can be added upstream of the methanation reactor if it contains some oxygen, carbon oxides and water).

Downstream of secondary reformer **42,** synthesis gas **62** is cooled in a boiler **70** for producing steam **72** and a product stream **74.** Synthesis gas **62** contains carbon monoxide which is not useful for ammonia synthesis, and which is a poison for the ammonia converter catalyst. Therefore, a high-temperature shift reactor **76** converts a portion of the carbon monoxide to carbon dioxide and hydrogen over a catalyst. High temperature shift reactor **76** produces a product stream **78,** which is cooled in a boiler **80** producing steam **82** and a product stream **84** which is further cooled in an exchanger **86** heating a stream **88** (boiler feedwater) to produce a product stream **90.** Still containing some carbon monoxide, product stream **90** is fed to a low temperature shift reactor **92** which shifts more carbon monoxide to carbon dioxide and hydrogen, producing a product stream **94.**

Product stream **94** is further cooled in an exchanger **96** against a stream **98** (boiler feedwater) before being fed to a carbon dioxide recovery section **104,** which removes carbon dioxide as a stream **106** using steam **107.** A great part of the steam contained in the synthesis gas is also removed in this section. A product **108** is produced by carbon dioxide recovery unit **104** which is fed through a heat exchanger **110** into a methanation reactor **112** via a line **114.** Further heating of stream **114** might be necessary by external means (e.g. in a heat exchanger using steam) to allow it to have the adequate temperature to render reaction over the methanation catalyst possible. Methanation product **116** is cooled in exchanger **118** to condense remaining steam which is removed in unit **122.** The process gas from secondary reformer **42** through product stream **124** is referred to generally as synthesis gas. Nitrogen stream **60** is added to the process at some point to provide an ammonia synthesis feed stream **126** which is fed to ammonia synthesis section **66.** A purge **128** is taken from ammonia synthesis section **66** and used as fuel (e.g. in the primary reformer burners) and an ammonia product stream **130** is produced.

In this manner ammonia production can be increased where the primary reformer and the air compressor would otherwise limit an increase in ammonia production. A need may remain for debottlenecking other portions of the plant, such as the high or low temperature shift reactors or the methanation reactor or units in the synthesis section, but in any case the investments spared by the present invention will represent a significant part of the total investments. The present invention is further illustrated by the following examples, which were developed using a computer simulation of an ammonia plant such as the one illustrated in the Figure and described above. A common basis is provided for each example, namely:
1. Ammonia production is increased from an initial 977.6 to 1075.4 tons/day (t/d), an increase of 97.8 t/d, a ten percent increase in production rate;
2. A side burner is used to control the temperature of the superheated steam fed to turbine **28**. The fuel burned in the burner is included in the "total fuel gas" mentioned in the Table.
3. The fuel to an auxiliary boiler is manipulated in order to close the steam and mechanical energy balance of the plant (steam by heat recovery plus steam by auxiliary boiler - process steam - steam used in turbines - steam export = 0). The electric power needed for an auxiliary air compressor (as defined in Example 1) is not included in this balance. The fuel to the auxiliary boiler is included in the "total fuel gas" mentioned in the Table;
4. Natural gas composition is (in mole percent): 87.74 % methane; 7.11 % ethane; 1.55 % carbon dioxide and 3.60 % nitrogen;
5. Oxygen stream composition is (in mole percent): 99.5 % oxygen and 0.5 % argon (although lower purity can be used in implementing the invention, but argon content should not be excessive);
6. Maximum secondary reformer outlet temperature is 1000°C for the sake of the demonstration examples; and
7. Feed to an ammonia synthesis converter in the ammonia synthesis section contains 12 mole % inerts. This is an example: any other inerts ratio that respects constraints and optimizes the synthesis section operation can be used.
8. In the table, "GJ" is GJ Higher Heating Value and tons are metric tons. The power needed for oxygen and nitrogen production is not included in the "specific energy consumption", which is expressed in GJ/t NH3 in the Table.

The table below provides data for the following six examples, as well as for the initial case (prior to the capacity increase, called "Base"):

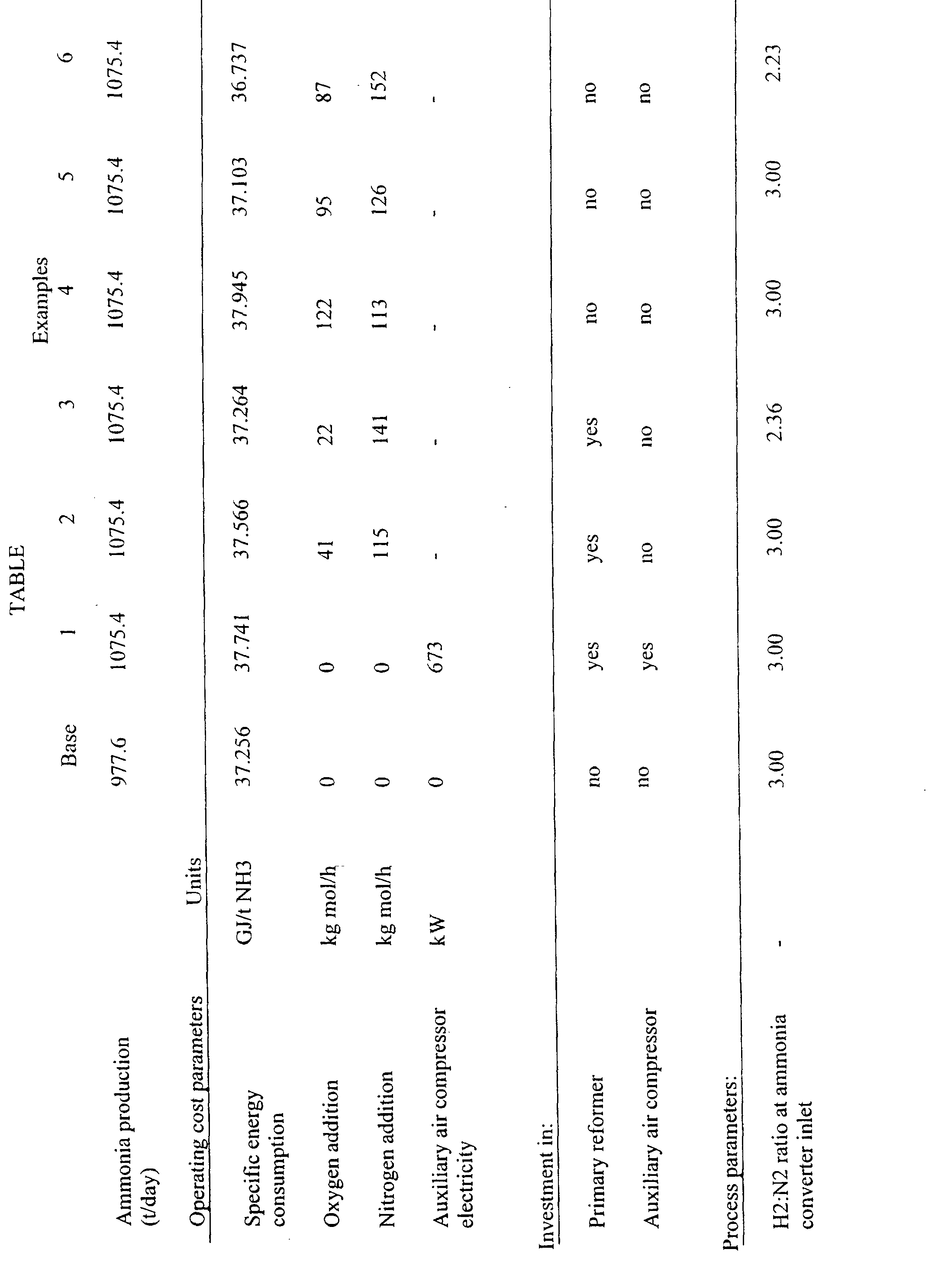

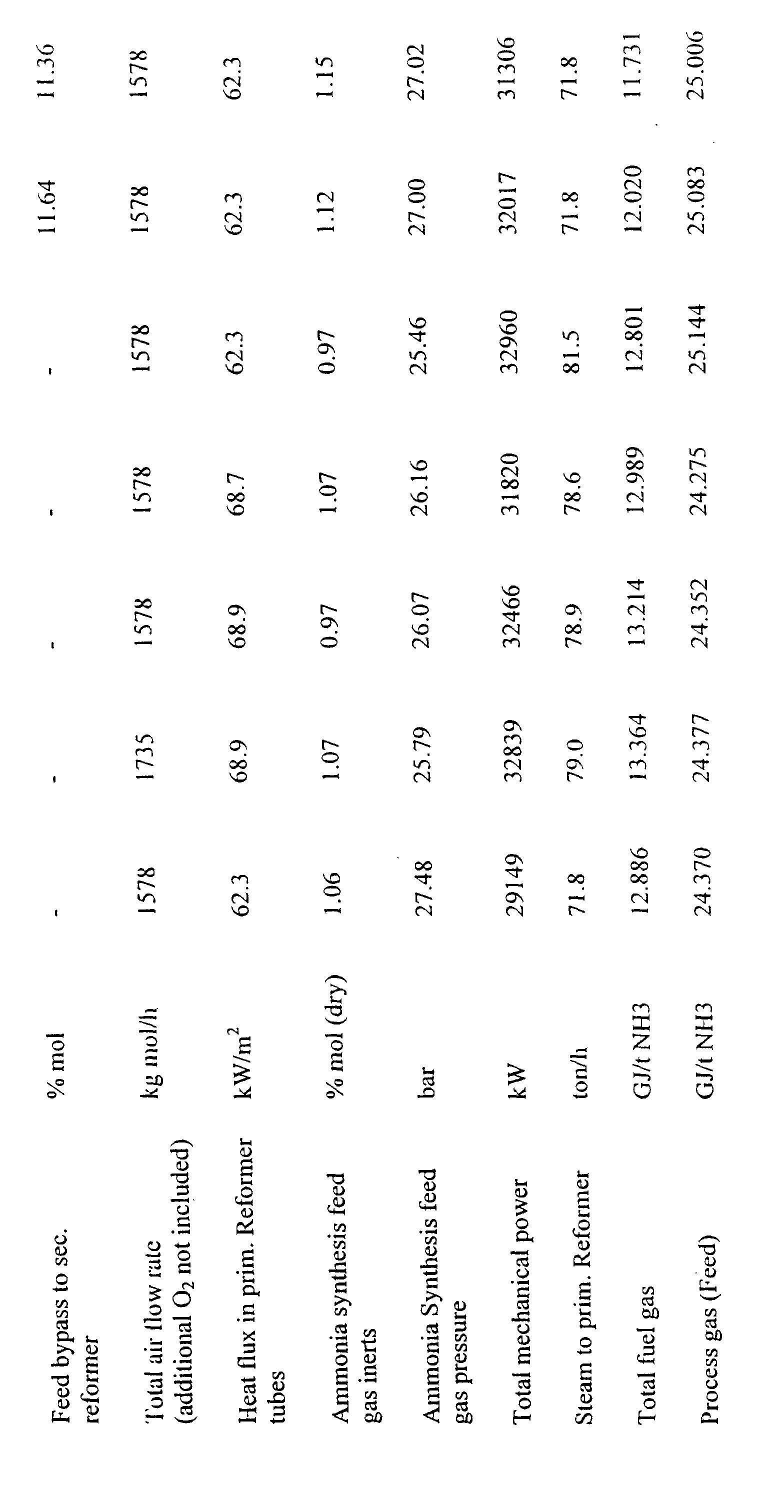

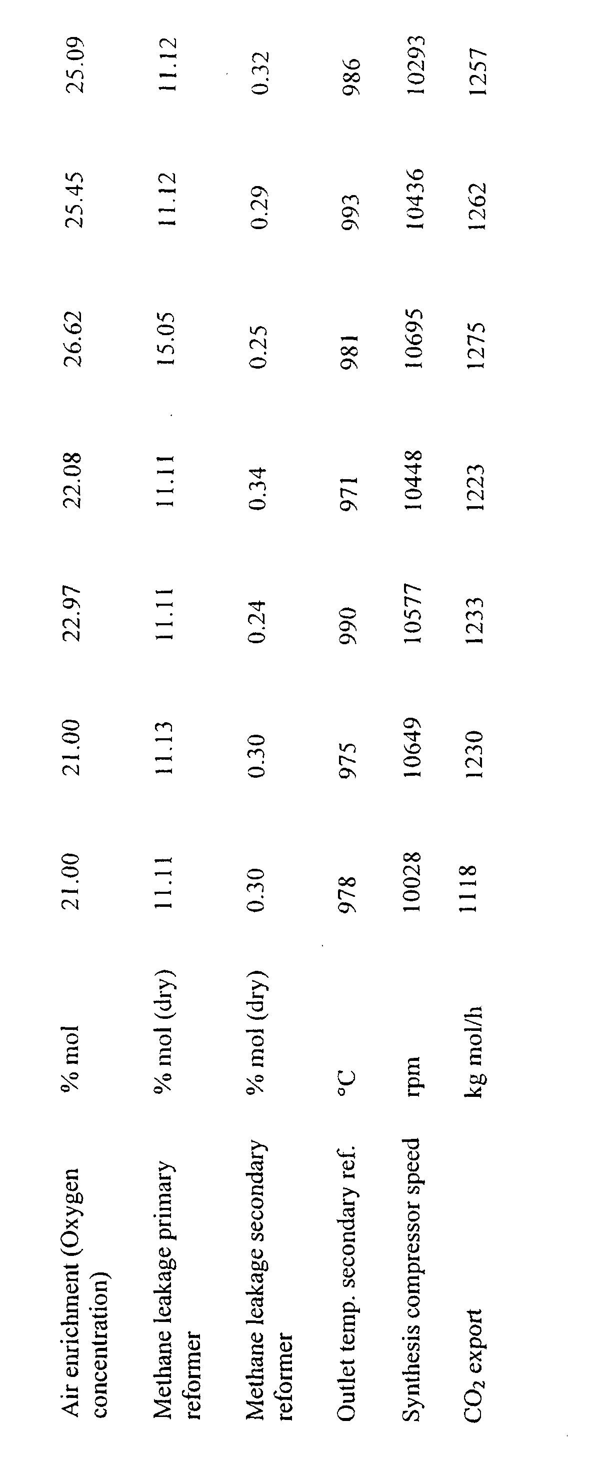

### EXAMPLE 1

This is a case for increasing ammonia production from the initial 977.6 to 1075.4 t/d without injecting oxygen or nitrogen. Production would be increased by either revamping the primary reformer, such as by installing thinner tubes or more active catalyst, or by providing an additional primary reformer in parallel to the existing one. An existing air compressor works at its upper limit (1,578 kg mole/h) and is driven by a steam turbine. An auxiliary air compressor would be purchased and placed in parallel with the existing one. The total inlet air flow rate is adjusted to satisfy nitrogen requirements, maintaining a H₂:N₂ ratio of 3.00, as can be seen in the Table. An electric motor would be used to drive the auxiliary air compressor because it is more flexible than a steam turbine, and electric is preferred for small air flow rates. With reference to the Table, its energy consumption is 673 kW and is not in the steam-mechanical energy balance.

### EXAMPLE 2

Ammonia production is increased to 1075.4 t/d as is the case for all of the examples. While in Example 1, production was increased by both revamping the primary reformer (or adding a new one) and adding an auxiliary air compressor, that is not the case here. In Example 2 the primary reformer is again assumed revamped, but the auxiliary air compressor is eliminated. The heat flux in the primary reformer tubes is the same as in Example 1 at 68.9 KW/m². A single air compressor is working at its upper limit, providing a flow rate of 1,578 kg mol/hr as compared to 1,735 kg mol/h in Example 1 with its auxiliary air compressor. Oxygen was added at the rate of 41 kg mol/hr to process air line **50** via oxygen stream **58.** A H₂:N₂ ratio of 3.00 was maintained between Examples 1 and 2 by injecting nitrogen as shown in the Figure. The flow rates of oxygen stream **58,** nitrogen stream **60,** feed **12** and fuel gas **32** were adjusted to accommodate the production increase within operating constraints while minimizing operating cost.

Since there is no auxiliary air compressor, the air flow rate is smaller in Example 2 than in Example 1. Pressure drops are thus smaller, and ammonia synthesis feed gas **126** pressure is higher (26.07 bar instead of 25.79 bar). As compared to Example 1 the total mechanical power requirement is reduced from 32839 to 32466 kW and the total fuel gas requirement is reduced from 13.364 to 13.214 GJ/t NH₃. Thus, specific energy consumption decreases from 37.741 to 37.566 GJ/t NH₃. Not only is the investment for the auxiliary air compressor eliminated, the operating cost of 673 kW is also eliminated. This is illustrative of a situation where an ammonia plant cannot increase production because its air compressor is operating at maximum capacity while other portions of the plant can increase production. Example 2 thus shows that if production can otherwise be increased, then investment in and operating costs for an auxiliary air compressor can be eliminated by adding oxygen and nitrogen instead according to the present invention.

### EXAMPLE 3

In this simulation the operating configuration is the same as in Example 2 (production bottleneck is the air compressor), but the H₂:N₂ ratio upstream of ammonia converter in section **66** is optimized to further reduce operating cost. The air flow rate here is the same as in Example 2, which is less than in Example 1 since no auxiliary air compressor is installed for the ammonia production increase. However, the flow rate of oxygen stream **58** has been decreased from 41 to 22 kg mol/h, allowing methane concentration in ammonia synthesis gas **62** to increase from 0.24 to 0.34 mol %, and the flow rate of nitrogen stream **60** has been increased from 115 to 141 kg mol/h. Example 3 provides a more cost effective solution than Example 2 since nitrogen is less expensive than oxygen and the specific consumption decreases as explained in the paragraph below.

Pressure drops downstream of secondary reformer **42** are reduced resulting in a higher pressure for ammonia synthesis feed gas **126.** The pressure is 26.16 instead of 26.07 bar, as compared to 25.79 bar in Example 1. The H₂:N₂ ratio is reduced from 3.00 to 2.36. For the specific case the ammonia converter performs better and less matter circulates in the ammonia synthesis section **66** to produce the same amount of ammonia. As compared to Example 2 the total mechanical power is reduced from 32466 to 31820 kW and total fuel gas consumption is down to 12.989 from 13.214 GJ/t of ammonia produced. Overall, specific energy consumption is reduced from 37.566 to 37.264 GJ/t of ammonia produced.

This case demonstrates the benefits of dissociating the oxygen and nitrogen injection in an ammonia plant. The flow rate of nitrogen stream **60** is easy to manipulate, and the H₂:N₂ ratio can be easily controlled without perturbing the operation of the primary and secondary reformers, which allows the optimization of the H₂:N₂ ratio in ammonia synthesis section **66.** On the other hand oxygen injection allows independent control of the methane leakage (concentration) downstream of secondary reformer **42** in ammonia synthesis gas **62**. In the specific case examined, it is more economical to have a greater methane leakage (0.34% instead of 0.24 mol % for Example 2 or 0.30 mol % for Example 1). This demonstrates the flexibility that separate oxygen and nitrogen injection provides in an ammonia plant. This is a preferred case, when the air compressor is the bottleneck, the primary reformer either having sufficient capacity or an investment being made in it to provide sufficient capacity for a ten percent increase in ammonia production.

### EXAMPLE 4

While Example 3 was used to illustrate an incremental improvement over Example 2, Example 4 should be compared to Example 1. In Example 4 there is no investment in either the primary reformer or the air compressor, yet ammonia production is increased by ten percent, which is the basis for all of the examples. Both the primary reformer and the air compressor are assumed to be operating at maximum capacity. The heat flux in the primary reformer was not allowed to exceed 62.3 kW/m², which corresponds to the heat flux in the primary reformer for the initial plant capacity of 977.6 t NH₃/day (base example). There is no auxiliary air compressor, and air compressor **46** provides 1578 kg mol/h of process air while consuming 6737 kW of energy. The flow rate of oxygen stream **58** is 122 kg mol/h, and the flow rate of nitrogen stream **60** is 113 kg mol/hr versus none of either in Example 1. The H₂:N₂ ratio is 3.00 which is the same as in Example 1.

The flow rates of oxygen stream **58,** nitrogen stream **60,** feed **12,** and fuel gas **32** are adjusted to provide the ammonia production increase while satisfying various constraints, such as maximum heat flux in primary reformer **16**, and minimizing operating costs. There is no flow in bypass line **64,** so all of the process gas feed to secondary reformer **42** is provided by primary reformer product stream **40.**

In this case, due to the limitation in the heat flux in the primary reformer tubes, the gas passing through it is less reformed, i.e. the methane leakage in the primary reformer is 15.05 versus 11.13 mol % for Example 1. Thus, the process gas has to be further reformed in the secondary reformer. In comparison with Example 1, additional process gas has to be fed to the secondary reformer because part of it is used as fuel gas to provide heat by combustion. Hence, the pressure drops increase because this gas is passing through the primary reformer where the pressure drops are more important than in the secondary reformer. Due to a constraint on the steam-to-carbon ratio (3.5:1), more steam has to be mixed with the process gas and this contributes to the pressure drop increase as well as requiring greater steam production. On the other hand, less fuel gas per ton of ammonia produced is needed for firing the primary reformer because the heat flux in the primary reformer remains as in the base example while production increases.

Globally, the decrease in fuel consumption (12.801 GJ/t instead of 13.364 GJ/t) is less important than the increase of the process gas consumption (25.144 GJ/t instead of 24.377 GJ/t NH₃ produced) and therefore the specific energy consumption increases to 37.945 from 37.741 GJ/t of ammonia produced. Because more gas is now introduced in the secondary reformer to be reformed, the amount of pure oxygen added is significant (122 kg mol/h, enriching the air to 26.62 mol % 0₂). This increases the operating cost for this case, although any investment to revamp the primary reformer and for an auxiliary air compressor is avoided. Although ammonia production is increased, the primary reformer operates at conditions even smoother than when the plant produced 977.6 t/day of ammonia because the leakage is higher than in the base example. Thus, production can be increased without placing a thermal stress on the primary reformer so the tubes and the catalyst will last longer.

For this case the CO₂ export increases (1275 kg mol/h instead of 1230 for Example 1). This is a supplementary benefit.

### EXAMPLE 5

In this case feed bypasses the primary reformer putting 11.64 mol % of feed **12** into bypass line **64** for direct feed to secondary reformer **42.** This amount is chosen so as to minimize operating cost without increasing excessively the secondary reformer's outlet temperature, staying below the 1000 °C constraint but increasing from 975 to 993 °C. The flow rate of oxygen stream **58** is 95 kg mol/h, and the flow rate of nitrogen stream **60** is 126 kg mol/h versus none of either in Example 1. The H₂:N₂ ratio is 3.00, the same as in

### Example 1.

Some of the process gas is used now in the secondary reformer as fuel gas to provide heat by combustion. Consequently, more process gas is used (25.083 versus 24.377 GJ/t NH₃ for Example 1). Steam for reforming reactions in secondary reformer **42** is provided by steam passing through the primary reformer, and its quantity is sufficient to guarantee a trouble-free operation in the secondary reformer. In fact the amount of steam required is reduced from 79.0 ton/hr steam for the primary reformer in Example 1 to 71.8 t/h in this case. This makes the fuel gas consumption to decrease. If the steam were not sufficient, steam can be added to the process gas going directly to the secondary reformer, or just upstream the high-temperature shift reactor. Because smaller amounts of process gas and steam are passing through the primary reformer due to the bypass, and less nitrogen is present in the front end, due to the nitrogen injection just before the ammonia synthesis section, the pressure drops are significantly lower. Consequently, the inlet pressure to the synthesis section is higher, 27.00 bar instead of 25.79 for Example 1, and power consumption in the plant is now 32017 versus 32839 kW for Example 1. Also, less fuel gas per ton of ammonia produced is needed for firing the primary reformer because the heat flux in the primary reformer remains as in the base example while production increases. For all the reasons mentioned above, fuel gas is reduced to 12.020 from 13.364 GJ/t NH₃ produced. Total specific energy consumption is reduced from 37.741 to 37.103 GJ/t NH₃ produced.

Thus, although ammonia production is increased 10 % without an investment in either the primary reformer or the air compressors, total specific energy consumption is lower than if these investments were made. This illustrates that for an ammonia plant constrained by its primary reformer and its process air compressor, addition of oxygen and nitrogen allows ammonia production to be increased without requiring an investment in either the primary reformer or the air compressor.

Although the capacity is increased by 10%, the primary reformer suffers the same thermal stress (62.3 kW/m2 as in the base example (operation of 977.6 t/day).

Also, the CO₂ export increases (1262 kg mol/h instead of 1230 kg mol/h) and this is a supplementary benefit.

### EXAMPLE 6

In this case the operation illustrated in Example 5 is further optimized. Again, both the primary reformer and the air compressor are assumed to be operating at maximum capacity. There is no investment in either the primary reformer or the air compressor, and ammonia production is increased by ten percent. Less oxygen is used here than in Example 5, and more nitrogen is used. This reduces the H₂:N₂ ratio which reduces operating costs below that in Example 5. Operating costs are lower for the following reasons. As compared to Example 5, oxygen consumption is lower at 87 rather than 95 kg mol/hr. In the specific case the ammonia converter works more efficiently for lower H2:N2 ratio and, thus, the flow rate in the synthesis section is lower while producing the same amount of ammonia. The power consumption is lower (31306 versus 32017 in Example 5 versus 32839 kW in Example 1), and the fuel gas consumption is lower (11.731 versus 12.020 in Example 5 versus 13.364 GJ/t NH₃ in Example 1). Thus the specific energy consumption decreases (36.737 versus 37.103 in Example 5 versus 37.741 GJ/t NH₃ in Example 1), and this provides lower operating costs. Again, as in Example 5, 673 kW of electrical power are not needed since the auxiliary compressor is not needed.

Although the capacity is increased by 10% the primary reformer suffers the same thermal stress (62.3 kW/m2) as in the base example (operation of 977.6 t/day).

The CO₂ export also increases (1257 kg mol/h instead of 1230 kg mol/h) and this is a supplementary benefit.

This is a preferred case when both the primary reformer and the air compressor are bottlenecks to an increase in ammonia production. A portion of the feed (11.36 mol % of feed 12 ) bypasses the primary reformer, and is fed directly to the secondary reformer via bypass line **64.** By easily manipulating nitrogen flow, the H₂:N₂ ratio is optimized for the plant. Oxygen injection is easily manipulated not only to produce more hydrogen but also to control methane leakage without excessively increasing the secondary reformer's outlet temperature, and its operating cost is reasonable in light of the increase in ammonia production without investment in the primary reformer or the air compressor.

With oxygen and nitrogen injection, the rotation speed of an ammonia synthesis gas compressor is reduced (10293 versus 10649 rpm in Example 1). This means that the invention proposed can help to overcome another frequently encountered bottleneck, the ammonia synthesis gas compressor.

It is therefore possible to increase the capacity of an ammonia production plant fed by steam reforming where the primary steam reformer and the process air compressor are bottlenecks without investing in supplementary primary steam reformer capacity or in an auxiliary air compressor. The invention does not change substantially the operating conditions of the primary reformer, which allows for a longer life for this piece of equipment. Oxygen, separately injected, provides the necessary heat for reforming in the secondary reformer by combustion with process gas there, and methane leakage can be easily controlled by manipulating the amount of oxygen injected. Nitrogen injection supplements the supply of this necessary reactant for an increase in ammonia production. The H₂:N₂ ratio is easily optimized by simply manipulating the flow of nitrogen stream **60**. Separate and independent nitrogen injection decouples the steam reformers from the ammonia synthesis section to a great extent, thus smoothing out the operation of the plant. Similarly, control of methane leakage by manipulating the flow of oxygen stream **58** decouples the primary reformer from the secondary reformer to a greater extent than in traditional schemes, thus providing a smoother operation. Thus, control schemes can be more easily and successfully implemented to optimize hydrogen production from each reformer, controlling and manipulating multiple variables to maintain each reformer at its operating constraint. The present invention thus allows ammonia production capacity to be increased without significant capital investment while decreasing the specific energy consumption of the plant and increasing its operating flexibility.

## Claims

1. A process for increasing ammonia production in an ammonia synthesis plant having a primary reformer, a secondary reformer and an air compressor for supplying air to the said secondary reformer, without expanding the capacity of either the primary reformer or the air compressor, the process comprising :
- flowing a light hydrocarbon feed to the ammonia synthesis plant,
- flowing a secondary reformer feed to the secondary reformer,
- adding an oxygen stream to the air feeding of the secondary reformer for forming synthesis gas containing methane, the oxygen stream having a purity of at least 90 mole percent oxygen,
- controlling the concentration of methane in the synthesis gas by manipulating the flow rate of the oxygen stream,
- adding a nitrogen stream to the synthesis gas to form an ammonia synthesis feed gas, and the nitrogen stream having a purity of at least 90 mole percent nitrogen, and
- controlling a H₂:N₂ ratio at an ammonia converter inlet by manipulating the flow rate of the nitrogen stream.

2. The process of claim 1, wherein at least a portion of the light hydrocarbon fend is fed directly to the secondary reformer as at least a portion of the secondary reformer feed, said portion bypassing the primary reformer.

3. The process of claim 1, wherein the increase in ammonia production requires an increase in the light hydrocarbon feed, and a major portion of the increase in this lighthydrocarbon feed is fed directly to the secondary reformer as at least a portion of the secondary reformer feed.

4. The process of claim 1, wherein the purity of the oxygen stream is at least 97 mole percent.

5. The process of claim 1, wherein the purity of the nitrogen stream is at least 97 mole percent.

6. The process of claim 1, wherein the H₂:N₂ ratio at the ammonia converter inlet is controlled to less than or equal to 3.0.

7. The process of claim 1, wherein the H₂:N₂ ratio at the ammonia converter inlet is greater than 3.0.

## Patentansprüche

1. Verfahren zur Erhöhung der Ammoniakproduktion in einer Ammoniaksyntheseanlage mit einem Primärreformer, einem Sekundärreformer und einem Luftverdichter zur Versorgung des Sekundärreformers mit Luft ohne Überschreitung der Kapazität des Primärreformers oder des Luftverdichters, bei dem man:
- der Ammoniaksyntheseanlage einen leichten Kohlenwasserstoff-Einsatzstrom zuführt,
- dem Sekundärreformer einen Sekundärreformer-Einsatzstrom zuführt,
- der den Sekundärreformer speisenden Luft zur Bildung von methanhaltigem Synthesegas einen Sauerstoffstrom zusetzt, wobei der Sauerstoffstrom eine Reinheit von mindestens 90 Molprozent Sauerstoff aufweist,
- die Methankonzentration im Synthesegas durch Manipulation der Strömungsrate des Sauerstoffstroms reguliert,
- dem Synthesegas zur Bildung eines Einsatzgases für die Ammoniaksynthese einen Stickstoffstrom zusetzt, wobei der Stickstoffstrom eine Reinheit von mindestens 90 Molprozent Stickstoff aufweist, und
- das H₂/N₂-Verhältnis an einem Eingang des Ammoniak-Konverters durch Manipulation der Strömungsrate des Stickstoffstroms reguliert.

2. Verfahren nach Anspruch 1, bei dem man zumindest einen Teil des leichten Kohlenwasserstoff-Einsatzstroms direkt dem Sekundärreformer als zumindest ein Teil des Sekundärreformer-Einsatzstroms zuführt, wobei dieser Teil den Primärreformer umgeht.

3. Verfahren nach Anspruch 1, bei dem die Erhöhung der Ammoniakproduktion eine Erhöhung des leichten Kohlenwasserstoff-Einsatzstroms erfordert und man einen Hauptteil der Erhöhung des leichten Kohlenwasserstoff-Einsatzstroms direkt dem Sekundärreformer als zumindest ein Teil des Sekundärreformer-Einsatzstroms zuführt.

4. Verfahren nach Anspruch 1, bei dem der Sauerstoffstrom eine Reinheit von mindestens 97 Molprozent aufweist.

5. Verfahren nach Anspruch 1, bei dem der Stickstoffstrom eine Reinheit von mindestens 97 Molprozent aufweist.

6. Verfahren nach Anspruch 1, bei dem man das H₂/N₂-Verhältnis am Eingang des Ammoniak-Konverters auf kleiner gleich 3,0 reguliert.

7. Verfahren nach Anspruch 1, bei dem das H₂/N₂-Verhältnis am Eingang des Ammoniak-Konverters größer als 3,0 ist.

## Revendications

1. Procédé pour augmenter la production d'ammoniac dans une usine de synthèse de l'ammoniac, ayant un reformeur primaire, un reformeur secondaire et un compresseur d'air pour la fourniture d'air audit reformeur secondaire, sans expansion de la capacité soit du reformeur primaire, soit du compresseur d'air, le procédé comprenant :
- l'écoulement d'une alimentation d'hydrocarbures légers vers l'usine de synthèse d'ammoniac,
- l'écoulement d'une alimentation de reformeur secondaire vers le reformeur secondaire,
- l'addition d'un courant d'oxygène à l'alimentation d'air du reformeur secondaire pour la formation d'un gaz de synthèse contenant du méthane, le courant d'oxygène ayant une pureté d'au moins 90 pour cent en moles d'oxygène,
- le contrôle de la concentration de méthane dans le gaz de synthèse par manipulation du débit du courant d'oxygène,
- l'addition d'un courant d'azote au gaz de synthèse pour former un gaz d'alimentation de synthèse de l'ammoniac et le courant d'azote ayant une pureté d'au moins 90 pour cent en moles d'azote, et
- le contrôle d'un rapport H₂ : N₂ à l'admission du convertisseur d'ammoniac par manipulation du débit du courant d'azote.

2. Procédé selon la revendication 1, **caractérisé en ce qu'**au moins une portion de l'alimentation d'hydrocarbures légers est alimentée directement au reformeur secondaire en tant qu'au moins une portion de l'alimentation de reformeur secondaire, ladite portion passant en dérivation du reformeur primaire.

3. Procédé selon la revendication 1, **caractérisé en ce que** l'augmentation de la production d'ammoniac exige une augmentation de l'alimentation d'hydrocarbures légers, et **en ce qu'**une majeure portion de l'augmentation de cette alimentation d'hydrocarbures légers est alimentée directement au reformeur secondaire en tant qu'au moins une portion de l'alimentation de reformeur secondaire.

4. Procédé selon la revendication 1, **caractérisé en ce que** la pureté du courant d'oxygène est au moins de 97 pour cent en moles.

5. Procédé selon la revendication 1, **caractérisé en ce que** la pureté du courant d'azote est au moins de 97 pour cent en moles.

6. Procédé selon la revendication 1, **caractérisé en ce que** le rapport H₂ : N₂ à l'admission du convertisseur d'ammoniac est contrôlé pour prendre une valeur inférieure ou égale à 3,0.

7. Procédé selon la revendication 1, **caractérisé en ce que** le rapport H₂ : N₂ à l'admission du convertisseur d'ammoniac est supérieur à 3,0.
